(19) Europäisches Patentamt
European Patent Office
Office européen des brevets

(11) **EP 2 599 091 B1**

(12) **FASCICULE DE BREVET EUROPEEN**

(45) Date de publication et mention
de la délivrance du brevet:
**21.01.2015 Bulletin 2015/04**

(51) Int Cl.:
*H01B 12/02* (2006.01)    *H01G 4/40* (2006.01)
*H01G 4/28* (2006.01)    *H01G 2/10* (2006.01)
*H01G 4/224* (2006.01)    *H02J 3/36* (2006.01)
*H02J 15/00* (2006.01)

(21) Numéro de dépôt: **11738014.7**

(22) Date de dépôt: **24.06.2011**

(86) Numéro de dépôt international:
**PCT/FR2011/051457**

(87) Numéro de publication internationale:
**WO 2012/013880 (02.02.2012 Gazette 2012/05)**

(54) **ÉLEMENT DE TRANSPORT D'ÉNERGIE, NOTAMMENT CÂBLE, ÉQUIPE D'UN DISPOSITIF DE STOCKAGE D'ÉNERGIE ÉLECTRIQUE**

LEISTUNGSÜBERTRAGUNGSELEMENT, IM BESONDEREN EIN KABEL, MIT EINER VORRICHTUNG ZUR SPEICHERUNG VON ELEKTRISCHER ENERGIE

POWER TRANSMISSION ELEMENT, IN PARTICULAR A CABLE, PROVIDED WITH A DEVICE FOR STORING ELECTRICAL POWER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.07.2010 FR 1056330**

(43) Date de publication de la demande:
**05.06.2013 Bulletin 2013/23**

(73) Titulaire: **Nexans**
**75008 Paris (FR)**

(72) Inventeur: **ALLAIS, Arnaud**
**F-69400 Limas (FR)**

(74) Mandataire: **Hervouet, Sylvie et al**
**Feray Lenne Conseil**
**Le Centralis**
**63, avenue du Général Leclerc**
**92340 Bourg-la-Reine (FR)**

(56) Documents cités:
**EP-A1- 1 612 906**    **GB-A- 1 062 242**
**JP-A- 5 308 726**    **KR-A- 20040 038 576**

**Description**

La présente invention concerne le stockage de l'énergie électrique.

Le domaine plus particulièrement concerné par l'invention est celui des réseaux de transport ou de distribution d'énergie, et en particulier d'énergie électrique. Dans ce type de réseaux, il est connu que la demande en énergie électrique peut fluctuer en fonction du moment de la journée ou de la nuit, et il est donc important de pouvoir équiper le réseau de moyens de stockage de l'énergie électrique non consommée de manière à ne pas avoir à la dissiper, et à pouvoir la réinjecter dans le réseau en cas de besoin.

Dans tout système électrique, l'énergie électrique peut être classiquement stockée en utilisant soit des condensateurs, soit des bobines de stockage.

Les composants condensateurs connus ne présentent cependant pas de capacités de stockage suffisantes pour être utilisés à ces fins.

On connaît par ailleurs, du document FR 1 485 653, un réseau de transport d'énergie électrique utilisant, pour le transport de l'énergie, des lignes supraconductrices, et, pour le stockage, des bobines d'inductance en série avec les lignes supraconductrices. Avec ce type de structure, il n'est pas possible d'emmagasiner suffisamment d'énergie. Par ailleurs, l'énergie ne peut être stockée que localement, plus précisément là où se trouve l'inductance, et il est plus difficile de récupérer l'énergie stockée.

Le document US 5, 006, 672 décrit quant à lui un dispositif de stockage d'énergie électrique, composé d'un ensemble d'éléments longitudinaux supraconducteurs disposés parallèlement autour d'un élément central, lui-même supraconducteur, l'élément central étant parcouru par un courant de sens opposé au courant parcourant l'ensemble d'éléments longitudinaux. Outre la complexité du dispositif de stockage, et le coût induit par le nombre d'éléments supraconducteurs utilisés, aucun des supraconducteurs ne peut être électriquement isolé. Il en résulte que ce dispositif ne peut servir à des fins de transport d'énergie électrique.

Le document JP 5308726 décrit un élément de transport d'énergie comportant un dispositif apte à former un moyen de stockage d'énergie électrique.

La présente invention a pour but de pallier les inconvénients et limitations précédents en proposant une solution très simple à réaliser, qui permette en outre le stockage de grandes quantités d'énergie électrique.

Pour ce faire, l'invention a pour objet un élément de transport d'énergie apte à relier au moins deux entités distantes d'un réseau de transport et/ou distribution d'énergie, l'élément de transport d'énergie étant de forme générale allongée selon un axe longitudinal, ledit élément comportant un dispositif apte à former un moyen de stockage d'énergie électrique s'étendant sur au moins une partie de la longueur de l'élément de transport, caractérisé en ce que ledit dispositif est un dispositif multicouche comprenant au moins deux couches en matériau conducteur électrique concentriques par rapport audit axe longitudinal de l'élément de transport, séparées l'une de l'autre par une couche intermédiaire en matériau diélectrique.

Ainsi, grâce à l'invention, le même élément reliant deux entités distantes du réseau peut servir simultanément au transport de l'énergie, et au stockage d'une importante quantité d'énergie électrique en tirant partie de la longueur généralement importante de cet élément.

Dans un premier mode de réalisation de l'invention, le dispositif multicouche est apte à former un condensateur de stockage de l'énergie électrique. Dans ce cas, l'une des deux couches en matériau conducteur électrique du dispositif multicouche est apte à être reliée à un générateur de tension continue, alors que l'autre couche est apte à être reliée à une masse.

En variante, le dispositif multicouche est apte à former un moyen de stockage inductif de l'énergie électrique. Dans ce cas, les deux couches en matériau conducteur électrique du dispositif multicouche sont en matériau supraconducteur, ces couches étant aptes à être reliées d'une part, électriquement entre elles au niveau d'une première extrémité du dispositif multicouche, et d'autre part, aux bornes d'un générateur de courant continu.

Le dispositif multicouche peut être rajouté sur un élément de transport (par exemple un câble) déjà existant, auquel cas le dispositif multicouche vient entourer concentriquement une enveloppe externe en matériau isolant électrique de l'élément.

En variante, l'élément de transport peut être conçu dès l'origine pour intégrer dans sa structure le dispositif multicouche.

Dans les deux cas, le processus de fabrication d'un câble est simple à réaliser et peut être implémenté sur une même ligne de fabrication.

L'invention ainsi que les avantages qu'elle procure seront mieux compris au vu de la description suivante, faite de manière non limitative dans le cas de réseau de transport et/ou distribution d'énergie électrique, en référence aux figures annexées, dans lesquelles :

- la figure 1 illustre schématiquement, en coupe longitudinale partielle, un élément de transport d'énergie équipé d'un dispositif de stockage d'énergie électrique de type capacitif selon un premier mode de réalisation possible conforme à l'invention ;
- la figure 2 illustre le fonctionnement d'un générateur de tension continue pour le fonctionnement en charge et en décharge du dispositif de stockage capacitif d'énergie électrique de la figure 1 ;
- la figure 3 illustre schématiquement, en coupe longitudinale partielle, un élément de transport d'énergie équipé d'un dispositif de stockage d'énergie électrique de type inductif selon un deuxième mode de réalisation possible conforme à l'invention ;
- la figure 4 illustre le fonctionnement d'un générateur de courant continu pour le fonctionnement en charge et en décharge du dispositif de stockage inductif d'énergie électrique de la figure 3 ;

- la figure 5 illustre schématiquement l'intégration d'un dispositif de stockage de type capacitif à l'intérieur d'un câble électrique, selon un troisième mode de réalisation possible conforme à l'invention ;
- la figure 6 illustre schématiquement l'intégration d'un dispositif de stockage de type inductif à l'intérieur d'un câble électrique, selon un quatrième mode de réalisation possible conforme à l'invention.

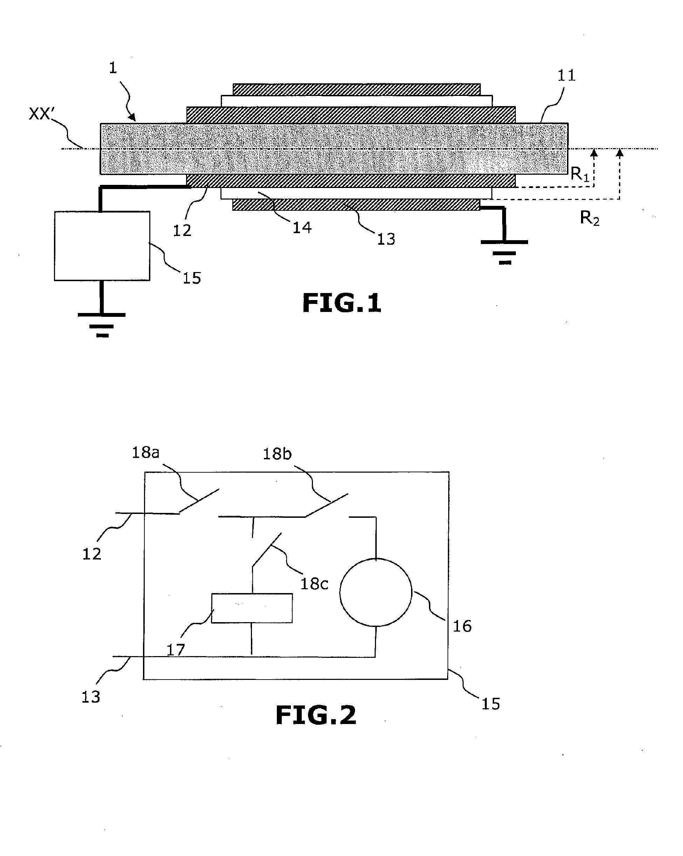

Deux modes de réalisations possibles dans lesquels un dispositif multicouche de stockage d'énergie vient entourer un élément de transport déjà existant vont dans un premier temps être décrits en références aux figures 1 à 4.

En référence tout d'abord à la figure 1, on a représenté schématiquement et partiellement un élément de transport 1 d'énergie pour un réseau de transport et/ou de distribution d'énergie électrique. Cet élément est destiné à relier au moins deux entités distantes du réseau, séparées par une distance plus ou moins importante, pour transporter l'énergie.

Dans le cas où le réseau considéré est un réseau de transport et/ou de distribution d'énergie électrique, l'élément de transport 1 est typiquement un câble électrique. Il peut s'agir d'un câble de type résistif, comportant une âme centrale constituée par exemple d'un ou plusieurs brins en matériau conducteur électrique, typiquement du cuivre, de section dépendant de l'énergie à transporter, une couche d'isolation électrique entourant l'âme centrale, et une couche d'écran. En variante, le câble électrique peut être de type supraconducteur, auquel cas il comporte classiquement une âme centrale comprenant des fils ou rubans en matériau supraconducteur, une couche d'isolation électrique entourant l'âme centrale, et une couche d'écran.

On peut aussi envisager l'application de l'invention à un réseau de transport et/ou distribution de fluide, avec un élément 1 de transport spécifiquement dédié au transport de fluide, par exemple d'eau. Dans ce cas, il présente avantageusement la forme d'un tube ou tuyau ou un conduit cylindrique en matière isolante électriquement, par exemple en PVC, à l'intérieur duquel le fluide peut s'écouler.

Dans tous les cas, l'élément 1 de transport d'énergie est de forme générale allongée selon un axe longitudinal XX', et comporte une enveloppe externe 11 en matériau isolant électrique, et va pouvoir être utilisé simultanément pour d'une part, transporter l'énergie entre les deux entités distantes du réseau, et, conformément à l'invention, pour stocker de l'énergie électrique.

Conformément à un premier mode de réalisation de l'invention, l'élément 1 est équipé, sur au moins une partie de sa longueur, d'au moins deux couches 12, 13 en matériau conducteur électrique concentriques à l'axe XX', séparées l'une de l'autre par une couche intermédiaire 14 en matériau diélectrique. Ces trois couches supplémentaires forment un dispositif multicouche entourant de manière concentrique l'enveloppe 11 sur au moins une partie de la longueur de l'élément 1 de transport, ce dispositif étant apte à former un moyen de stockage d'énergie électrique.

L'une des couches, par exemple la couche 12, est apte à être reliée, comme représenté sur la figure 1, à des moyens 15 de contrôle du stockage/déstockage de l'énergie, et plus précisément à une première borne d'un générateur 16 de tension continue (voir figure 2), et l'autre couche 13 est apte à être reliée à la deuxième borne du générateur de tension continue, le dispositif multicouche étant alors équivalent à un condensateur de stockage dont les armatures sont constituées par les deux couches 12 et 13.

La capacité C d'un tel condensateur peut être exprimée sous la forme :

$$ C = \frac{\varepsilon \times S}{e} $$

relation dans laquelle :

ε est la permittivité du diélectrique utilisé pour la couche intermédiaire 14,
S est la surface des armatures en regard, et
e est la distance entre les armatures.

Compte tenu de la géométrie cylindrique du dispositif, on peut montrer que la capacité peut aussi s'exprimer sous la forme :

$$ C = 2\pi\varepsilon \times L \times Ln\left(\frac{R_2}{R_1}\right) $$

relation dans laquelle :

$R_1$ est le rayon de la première couche 12 par rapport à l'axe longitudinal de l'élément 1,
$R_2$ est le rayon de la deuxième couche 13 par rapport à l'axe longitudinal de l'élément 1,
L est la longueur de l'élément 1 sur laquelle le dispositif multicouche s'étend, autrement dit, la longueur axiale du dispositif 1.

Ainsi, l'invention tire partie de la longueur des éléments de transport reliant deux entités distantes du réseau pour pouvoir réaliser un moyen de stockage capable de stocker de grandes quantités d'énergie, allant de quelques kilowatts-heure à des Mégawatts-heure. La figure 1 représente l'entièreté ou une portion d'une ligne de transmission/stockage. La continuité de l'élément de stockage est assurée par une connexion électrique des extrémités des couches 12, respectivement 13 de chaque portion.

La figure 2 représente schématiquement une mise en oeuvre possible des moyens 15 de contrôle de stockage/déstockage d'énergie , comportant le générateur 16 de tension continue, des moyens de commutation/coupure 18a, 18b (typiquement deux interrupteurs), et une charge 17 montée en parallèle sur la source de tension continue avec son système de commutation 18c (typiquement un troisième interrupteur. La charge 17 peut être constituée par un réseau d'infrastructure local, une installation industrielle ou un dispositif de stabilisation du réseau. Pendant la phase de stockage d'énergie électrique, un moyen de contrôle (non représenté) commande la fermeture des interrupteurs 18a, 18b et l'ouverture de l'interrupteur 18c. Il s'ensuit la charge du condensateur formé par les couches 12 et 13 du dispositif multicouche. Pour le maintien de l'énergie électrique stockée dans le dispositif multicouche, le moyen de contrôle commande l'ouverture de l'un des interrupteurs 18a ou 18b. Lorsque l'on désire récupérer, dans la charge 17, l'énergie stockée dans le dispositif multicouche, le moyen de contrôle commande l'ouverture de l'interrupteur 18b, et la fermeture de l'interrupteur 18c. Il convient de noter qu'un ou plusieurs moyens 15 de stockage/déstockage peuvent être reliés à chaque extrémité des couches 12 et 13. Le générateur de tension et ses moyens de commutation/coupure d'une part, et la charge 17 avec son système de commutation 18c d'autre part, peuvent être localisés indépendamment à chaque extrémité.

Pour augmenter encore la capacité de stockage, on peut prévoir que le dispositif multicouche comporte non pas uniquement deux couches 12, 13, mais une multitude de couches en matériau électriquement conducteur, séparées les unes des autres par une couche en diélectrique.

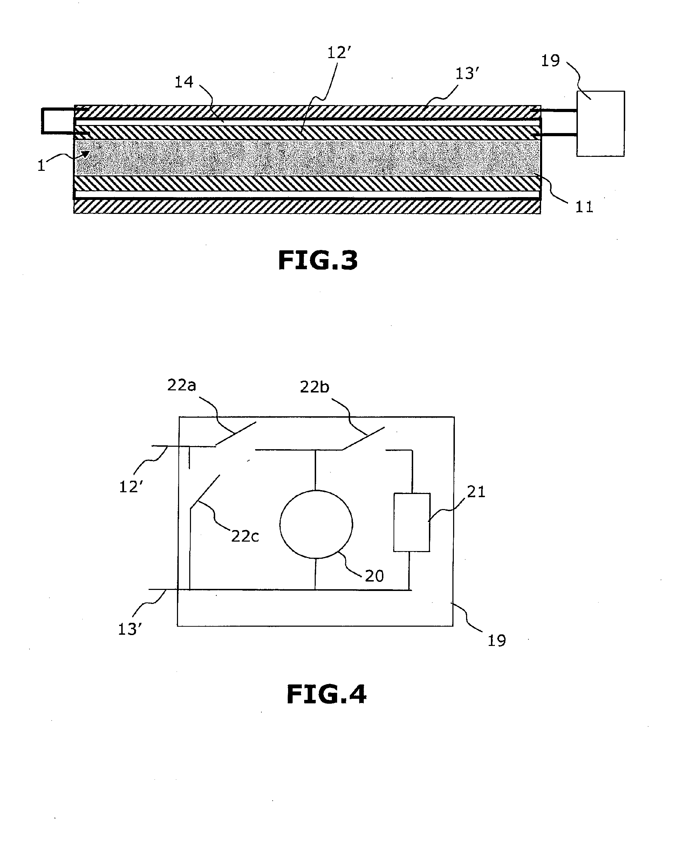

Un deuxième mode de réalisation possible dans lequel le moyen de stockage est de type inductif va à présent être décrit en référence à la figure 3 :

Sur cette figure, on retrouve un élément 1 de transport d'énergie apte à relier au moins deux entités d'un réseau de transport et/ou distribution d'énergie. Comme cela a été expliqué précédemment, cet élément 1 peut être soit un câble électrique de type résistif ou supraconducteur, soit un tube ou conduit en matériau isolant électrique pour l'acheminement d'un fluide. Dans les deux cas, l'enveloppe externe de l'élément est en matériau isolant électrique, soit du fait de la présence obligatoire d'un gainage isolant pour un câble électrique, soit par la nature même du matériau constituant le conduit dans les autres cas.

Tout comme le premier mode de réalisation précédemment décrit, et conformément à l'invention, l'élément 1 est équipé, sur au moins une partie de sa longueur, d'au moins deux couches 12', 13' en matériau conducteur électrique concentriques par rapport à l'axe longitudinal de l'élément 1, et séparées l'une de l'autre par une couche intermédiaire 14 en matériau diélectrique. Ces trois couches supplémentaires forment un dispositif multicouche entourant de manière concentrique l'enveloppe 11 sur au moins une partie de la longueur de l'élément 1 de transport, ce dispositif étant apte à former un moyen de stockage d'énergie électrique.

De manière différente au premier mode de réalisation, les deux couches 12' et 13' sont ici en matériau supraconducteur et sont aptes à être reliées à des moyens 19 de contrôle du stockage/déstockage de l'énergie, et plus précisément aux bornes d'un générateur 20 de courant continu (figure 4) de manière à former un moyen de stockage de type inductif.

Plus précisément, les deux couches sont reliées électriquement entre elles au niveau d'une première extrémité du dispositif multicouche, par exemple l'extrémité gauche comme illustré schématiquement sur la figure 3. Les deux autres extrémités libres des couches 12' et 13' situées au niveau de l'extrémité opposée du dispositif multicouche sont quant à elles aptes à être reliées aux deux bornes du générateur 20 de courant continu. En créant ainsi une boucle supraconductrice autour de l'élément 1, le dispositif multicouche se comporte comme un circuit continu supraconducteur stockant l'énergie sous la forme d'un champ magnétique créé par la circulation du courant continu dans les deux couches supraconductrices 13' et 14'.

L'énergie peut alors être restituée dans le réseau en déchargeant la boucle supraconductrice ainsi créée.

Du fait de la faible résistance des couches supraconductrices, les pertes d'énergie sont ici avantageusement plus faibles que dans les autres techniques de stockage.

La figure 4 représente schématiquement une mise en oeuvre possible des moyens 19 de contrôle de stockage/déstockage d'énergie , comportant le générateur 20 de courant continu, des moyens de commutation/coupure 22a, 22c (typiquement deux interrupteurs, l'interrupteur 22c étant de type supraconducteur), et une charge 21 montée en parallèle sur la source de courant continu avec son système de commutation 22b (typiquement un troisième interrupteur). La charge 21 peut être constituée par un réseau d'infrastructure local, une installation industrielle ou un dispositif de stabilisation du réseau. Pendant la phase de stockage d'énergie électrique, un moyen de contrôle (non représenté) commande la fermeture de l'interrupteurs 22a et l'ouverture des interrupteurs 22b et 22c. Le courant va ainsi pouvoir parcourir les deux couches 12' et 13'. Pour le maintien de l'énergie électrique stockée dans le dispositif multicouche, le moyen de contrôle commande la fermeture de l'interrupteur 22c, de sorte que le courant reste dans la boucle ainsi formée. Lorsque l'on désire récupérer, dans la charge 21, l'énergie stockée dans le dispositif multicouche, le moyen de contrôle commande la fermeture des l'interrupteurs 22a et 22b, l'interrupteur 22c restant ouvert.

De préférence, les couches supraconductrices 12' et 13' sont réalisées par des enroulements, l'enroulement d'une des couches ayant un pas inversé par rapport à l'enroulement de l'autre couche de façon à maximiser l'énergie.

Là encore, on profite des dimensions relativement importantes en longueur de l'élément support destiné à relier deux entités distantes du réseau pour permettre le stockage d'importantes quantités d'énergie.

Quel que soit le mode de réalisation utilisé parmi les deux modes décrits ci-dessus, tout élément de transport déjà existant pourra être facilement modifié en vue de réaliser les deux fonctions (transport d'énergie/stockage d'énergie électrique).

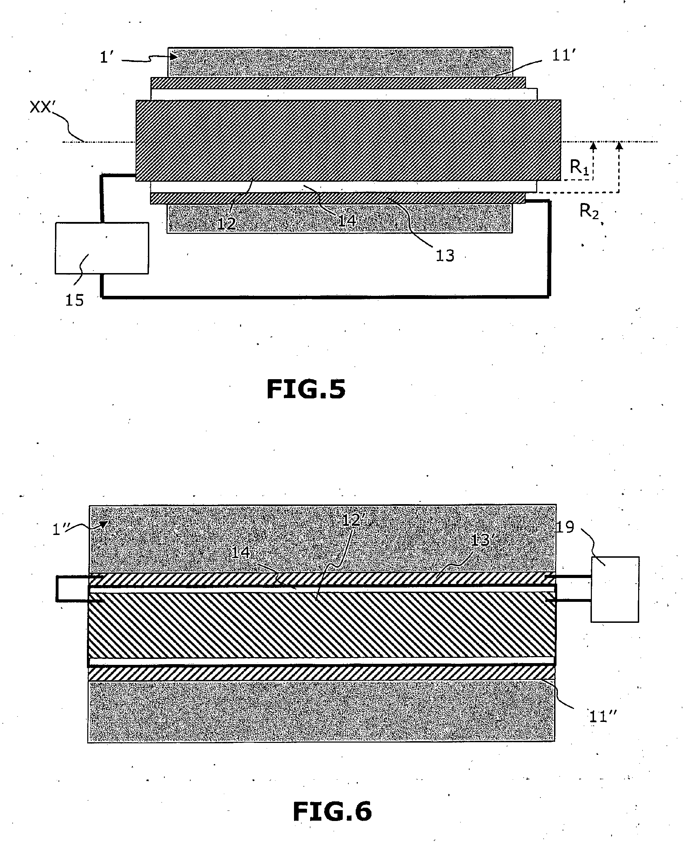

Il est également possible de prévoir d'intégrer le dispositif multicouche à l'intérieur même d'un câble électrique, comme cela va à présent être expliqué en référence aux figures 5 et 6 :

Plus précisément, la figure 5 illustre un troisième mode de réalisation de l'invention, dans lequel un dispositif de stockage de type capacitif est intégré à l'intérieur d'un câble électrique supraconducteur 1'. On rappelle qu'un tel câble supraconducteur est constitué de couches concentriques d'enroulement de fils ou de rubans supraconducteurs entourées de matériaux semi-conducteurs (rubans papier à base de noir de carbone) pour assurer que toutes les couches sont au même potentiel électrique. Pour insérer un dispositif de stockage capacitif au coeur d'un câble supraconducteur, il suffit d'isoler électriquement deux de ces couches (références 12, 13 sur la figure 5) par une couche isolante (référence 14 sur la figure 5), lors de la fabrication en utilisant des couches isolantes en lieu et place des couches semi-conductrices, et de les relier à un générateur de tension continue 15. On retrouve ainsi la structure de stockage capacitif décrite en référence à la figure 1, cette fois-ci à l'intérieur du câble. Les couches 12, 13, isolées électriquement entre elles par la couche 14, seront situées de préférence au coeur de l'âme du câble, en dessous des couches de transport (non représentées), et isolées de ces dernières par une couche de séparation isolante 11'.

De manière similaire, la figure 6 illustre un quatrième mode de réalisation de l'invention, dans lequel un dispositif de stockage de type inductif est intégré à l'intérieur d'un câble électrique supraconducteur 1".

Ici encore, il suffit d'isoler électriquement deux couches (références 12', 13' sur la figure 5) du câble 1" lors de la fabrication en utilisant des couches isolantes en lieu et place des couches semi-conductrices. Ces deux couches électriquement isolées peuvent alors être intégrées dans un circuit de stockage inductif d'énergie en reliant une extrémité au circuit 19 décrit à la figure 4 et en connectant les deux couches entre elles à l'autre extrémité. Ces couches, isolées électriquement entre elles par la couche 14, seront situées de préférence au coeur de l'âme du câble en dessous des couches de transport et isolées de ces dernières par une couche de séparation isolante 11".

## Revendications

1. Elément (1; 1'; 1") de transport d'énergie apte à relier au moins deux entités distantes d'un réseau de transport et/ou distribution d'énergie, l'élément (1; 1'; 1") de transport d'énergie étant de forme générale allongée selon un axe longitudinal (XX'), ledit élément comportant un dispositif apte à former un moyen de stockage d'énergie électrique s'étendant sur au moins une partie de la longueur de l'élément de transport, **caractérisé en ce que** ledit dispositif est un dispositif multicouche comprenant au moins deux couches (12, 13; 12', 13') en matériau conducteur électrique concentriques par rapport audit axe longitudinal de l'élément (1) de transport, séparées l'une de l'autre par une couche intermédiaire (14) en matériau diélectrique.

2. Elément (1; 1') de transport d'énergie selon la revendication 1, **caractérisé en ce que** l'une (12) des deux couches en matériau conducteur électrique du dispositif multicouche est apte à être reliée à une première borne d'un générateur (16) de tension continue, alors que l'autre couche (13) est apte à être reliée à l'autre borne, de manière à former un condensateur de stockage sur au moins une partie de la longueur de l'élément (1; 1') de transport d'énergie.

3. Elément (1; 1") de transport d'énergie selon la revendication 1, **caractérisé en ce que** les deux couches (12', 13') en matériau conducteur électrique du dispositif multicouche sont en matériau supraconducteur, et **en ce que** ces couches sont aptes à être reliées d'une part, électriquement entre elles au niveau d'une première extrémité du dispositif multicouche, et d'autre part, aux bornes d'un générateur (20) de courant continu au niveau d'une seconde extrémité du dispositif multicouche, de manière à former un moyen de stockage inductif de l'énergie électrique.

4. Elément (1; 1") de transport d'énergie selon la revendication 3, **caractérisé en ce que** les deux couches (12', 13') en matériau supraconducteur sont réalisées par des enroulements, l'enroulement d'une des couches ayant un pas inversé par rapport à l'enroulement de l'autre couche.

5. Elément (1 ; 1'; 1"), de transport d'énergie selon l'une quelconque des revendications précédentes, **caractérisé en ce que** le dispositif multicouche s'étend sur toute la longueur de l'élément de transport d'énergie.

6. Elément (1) de transport d'énergie selon l'une quelconque des revendications précédentes, **caractérisé en ce qu'**il comporte une enveloppe (11) en matériau isolant électrique, et **en ce que** ledit dispositif multicouche entoure concentriquement ladite enveloppe (11).

7. Elément (1'; 1") de transport d'énergie selon l'une quelconque des revendications 1 à 5, **caractérisé en ce qu'**il comporte une couche de séparation (11' ; 11") en matériau isolant électrique entourant concentriquement ledit dispositif multicouche.

8. Elément (1; 1'; 1") de transport d'énergie selon l'une quelconque des revendications précédentes, **caractérisé en ce qu'**il constitue un câble d'énergie électrique, ledit élément (1 ; 1' ; 1") de transport d'énergie étant ainsi apte à être utilisé simultanément pour le transport et/ou la distribution d'énergie électrique et pour le stockage d'énergie électrique.

9. Elément (1; 1'; 1") de transport d'énergie selon la revendication 8, **caractérisé en ce que** ledit câble d'énergie électrique est de type supraconducteur.

10. Elément (1 ; 1'; 1") de transport d'énergie selon la revendication 8, **caractérisé en ce que** ledit câble d'énergie électrique est de type résistif.

11. Elément (1) de transport d'énergie selon la revendication 6, **caractérisé en ce que** ladite enveloppe constitue une surface externe en matériau isolant électrique d'un tube ou conduit cylindre, ledit élément (1) de transport d'énergie étant ainsi apte à être utilisé simultanément pour le transport et/ou la distribution d'un fluide et pour le stockage d'énergie électrique.

**Patentansprüche**

1. Leistungsübertragungselement (1; 1'; 1"), das imstande ist, mindestens zwei beabstandete Einheiten eines Leistungstransport- und/oder -verteilungsnetzwerks zu verbinden, wobei das Leistungsübertragungselement (1; 1'; 1") eine gemäß einer Längsachse (XX') allgemein längliche Form hat, wobei das Element eine Vorrichtung aufweist, die imstande ist, ein Speicherelement elektrischer Energie zu bilden, das sich über mindestens einen Teil der Länge des Transportelements erstreckt, **dadurch gekennzeichnet, dass** die Vorrichtung eine mehrschichtige Vorrichtung ist, die im Verhältnis zur Längsachse des Transportelements (1) mindestens zwei konzentrische Schichten (12, 13; 12', 13') aus elektrisch leitendem Material umfasst, die durch eine Zwischenschicht (14) aus dielektrischem Material voneinander getrennt sind.

2. Leistungsübertragungselement (1; 1') nach Anspruch 1, **dadurch gekennzeichnet, dass** die eine (12) der zwei Schichten aus elektrisch leitendem Material der mehrschichtigen Vorrichtung imstande ist, mit einer ersten Klemme eines Gleichspannungsgenerators (16) verbunden zu sein, wogegen die andere Schicht (13) imstande ist, mit der anderen Klemme verbunden zu sein, so dass über mindestens einen Teil der Länge des Leistungsübertragungselements (1; 1') ein Speicherkondensator gebildet wird.

3. Leistungsübertragungselement (1; 1") nach Anspruch 1, **dadurch gekennzeichnet, dass** die zwei Schichten (12', 13') aus elektrisch leitendem Material der mehrschichtigen Vorrichtung aus supraleitendem Material sind, und dass diese Schichten imstande sind, einerseits auf Ebene eines ersten Endes der mehrschichtigen Vorrichtung elektrisch miteinander und andererseits auf Ebene eines zweiten Endes der mehrschichtigen Vorrichtung mit den Klemmen eines Gleichstromgenerator (20) verbunden zu sein, so dass ein induktives Speichermittel der elektrischen Energie gebildet wird.

4. Leistungsübertragungselement (1; 1") nach Anspruch 3, **dadurch gekennzeichnet, dass** die zwei Schichten (12', 13') aus supraleitendem Material durch Wicklungen hergestellt sind, wobei die Wicklung einer der Schichten eine Steigung hat, die im Verhältnis zur Wicklung der anderen Schicht umgekehrt ist.

5. Leistungsübertragungselement (1; 1'; 1") nach einem der vorangehenden Ansprüche, **dadurch gekennzeichnet, dass** sich die mehrschichtige Vorrichtung über die gesamte Länge des Leistungsübertragungselements erstreckt.

6. Leistungsübertragungselement (1) nach einem der vorangehenden Ansprüche, **dadurch gekennzeichnet, dass** es eine Hülle (11) aus elektrisch isolierendem Material aufweist, und dass die mehrschichtige Vorrichtung die Hülle (11) konzentrisch umgibt.

7. Leistungsübertragungselement (1'; 1") nach einem der Ansprüche 1 bis 5, **dadurch gekennzeichnet, dass** es eine Trennschicht (11'; 11") aus elektrisch isolierendem Material aufweist, die die mehrschichtige Vorrichtung konzentrisch umgibt.

8. Leistungsübertragungselement (1; 1'; 1") nach einem der vorangehenden Ansprüche, **dadurch gekennzeichnet, dass** es ein elektrisches Stromkabel darstellt, wobei das Leistungsübertragungselement (1; 1'; 1") somit imstande ist, gleichzeitig für den Transport und/oder für die Verteilung von elektrischer Energie und für die Speicherung elektrischer Energie verwendet zu werden.

9. Leistungsübertragungselement (1; 1'; 1") nach Anspruch 8, **dadurch gekennzeichnet, dass** das elektrische Stromkabel vom Typ Supraleiter ist.

10. Leistungsübertragungselement (1; 1'; 1") nach Anspruch 8, **dadurch gekennzeichnet, dass** das elektrische Stromkabel vom resistiven Typ ist.

11. Leistungsübertragungselement (1) nach Anspruch 6, **dadurch gekennzeichnet, dass** die Hülle eine äußere Fläche aus elektrisch isolierendem Material eines Rohrs oder einer zylindrischen Leitung darstellt, wobei das Leistungsübertragungselement (1) somit imstande ist, gleichzeitig für den Transport und/oder die Verteilung eines Fluids und zum Speichern elektrischer Energie verwendet zu werden.

**Claims**

1. An element (1; 1'; 1") for transporting energy able to connect at least two remote entities of an energy transport and/or distribution grid, the energy transport element (1; 1'; 1") having a generally elongated shape along a longitudinal axis (XX'), said element comprising a device able to form means for storing electricity extending over at least part of the length of the transport element, **characterized in that** said device is a multi-layer device comprising at least two layers (12, 13; 12', 13') made from an electrically conductive material that are concentric relative to said longitudinal axis of the transport element (1), separated from each other by an intermediate layer (14) made from a dielectric material.

2. The element (1; 1') for transporting energy according to claim 1, **characterized in that** one (12) of the two layers made from an electrically conductive material of the multi-layer device can be connected to a first terminal of a direct voltage generator (16), while the other layer (13) can be connected to the other terminal, so as to form a storage capacitor over at least part of the length of the energy transport element (1; 1').

3. The element (1; 1") for transporting energy according to claim 1, **characterized in that** the two layers (12', 13') made from an electrically conductive material of the multi-layer device are made from a superconductor material, and **in that** said layers can be electrically connected to each other at the first end of the multi-layered device, on the one hand, and on the other hand, connected across the terminals of a direct current generator (20) at a second end of the multi-layer device, so as to form an inductive electrical storage means.

4. The element (1; 1") for transporting energy according to claim 3, **characterized in that** the two layers (12', 13') made from a superconductive material are made by windings, the winding of one of the layers having a pitch opposite the winding of the other layer.

5. The element (1; 1'; 1 ") for transporting energy according to any one of the preceding claims, **characterized in that** the multi-layer device extends over the entire length of the energy transport element.

6. The element (1) for transporting energy according to any one of the preceding claims, **characterized in that** it comprises an enclosure (11) made from an electrically insulating material, and **in that** said multi-layer device concentrically surrounds said enclosure (11).

7. The element (1'; 1 ") for transporting energy according to any one of claims 1 to 5, **characterized in that** it comprises a separating layer (11'; 11") made from an electrically insulating material concentrically surrounding said multi-layer device.

8. The element (1; 1'; 1 ") for transporting energy according to any one of the preceding claims, **characterized in that** it constitutes an electrical cable, said element (1; 1'; 1") for transporting energy thus being able to be used simultaneously to transport and/or distribute electricity and for electricity storage.

9. The element (1; 1'; 1 ") for transporting energy according to claim 8, **characterized in that** said electrical cable is of the supraconductor type.

10. The element (1; 1'; 1 ") for transporting energy according to claim 8, **characterized in that** said electrical cable is of the resistive type.

11. The element (1) for transporting energy according to claim 6, **characterized in that** said enclosure constitutes an outer surface, made from an electrically insulating material, of a cylindrical tube or conduit, said element (1) for transporting energy thus being able to be used simultaneously to transport and/or distribute a fluid and to store electricity.

**FIG.1**

**FIG.2**

**FIG.3**

**FIG.4**

**FIG.5**

**FIG.6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1485653
- US 5006672 A
- JP 5308726 B